# EUROPEAN PATENT APPLICATION

(11) **EP 4 242 886 A1**
(43) Date of publication of application: **13.09.2023**
(21) Application number: 21893254.9
(22) Date of filing: 09.04.2021
(51) Int. Cl.: G06F 21/31

(54) **TRUSTED TERMINAL DETERMINATION METHOD AND RELATED DEVICE**

(30) Priority: 20.11.2020 CN 202011308408; 12.01.2021 CN 202110040728
(71) Applicant: Huawei Technologies Co., Ltd., Shenzhen, Guangdong 518129 (CN)
(72) Inventor: LI, Le, Shenzhen, Guangdong 518129 (CN); WU, Huajia, Shenzhen, Guangdong 518129 (CN); XU, Yongqiang, Shenzhen, Guangdong 518129 (CN); CHENG, Xiaolei, Shenzhen, Guangdong 518129 (CN)
(74) Representative: Körber, Martin Hans
(86) International application number: PCT/CN2021/086136
(87) International publication number: WO 2022/105096

(57) **Abstract**

A method for determining a trusted terminal and a related apparatus are provided, and are applied to a zero trust network security architecture, to improve security of the zero trust architecture. The method in embodiments of this application includes: A policy control apparatus performs identity authentication on a terminal. After the identity authentication on the terminal succeeds, the policy control apparatus generates a trust identifier and sends the trust identifier to the terminal. The terminal saves the trust identifier. When the terminal needs to access an application server, an environment awareness client installed in the terminal obtains the trust identifier from a location at which the trust identifier is saved in the terminal. The terminal sends an access request that carries a trust identifier to the policy control apparatus. The policy control apparatus determines, based on the trust identifier, that the terminal is a trusted terminal.

## Description

This application claims priority to Chinese Patent Application No. 202011308408.7, filed with the China National Intellectual Property Administration on November 20, 2020 and entitled "METHOD AND SYSTEM FOR SECURELY ACCESSING NETWORK BY TERMINAL", which is incorporated herein by reference in its entirety.

This application claims priority to Chinese Patent Application No. 202110040728.7, filed with the China National Intellectual Property Administration on January 12, 2021 and entitled "METHOD FOR DETERMINING TRUSTED TERMINAL AND RELATED APPARATUS", which is incorporated herein by reference in its entirety.

### TECHNICAL FIELD

This application relates to the field of network security technologies, and in particular, to a method for determining a trusted terminal in a zero trust network security architecture and a related apparatus.

### BACKGROUND

With development of informatization technologies such as mobile Internet, big data, and cloud computing, network risks and threats are increasing. A conventional security defense mode in which a trust system is established based on network borders gradually fails, and therefore a zero trust network security technology emerges. A zero trust architecture is a security architecture that implements access control centered on an identity of an access subject.

The zero trust architecture is used to establish a secure and trusted relationship between an access subject (a terminal) and an access object (a service application and a data resource). Generally, the zero trust architecture includes a terminal, a policy detection apparatus, a policy control apparatus, and a policy execution apparatus. An environment awareness client is deployed in the terminal, and the environment awareness client collects a security risk event (for example, a Troj an horse or virus attack) of the terminal in real time. The policy detection apparatus obtains the network security risk event of the terminal, and evaluates a security risk of the terminal based on the security risk event, to obtain an evaluation result. The policy control apparatus adjusts access permission of the access subject based on the evaluation result. The policy execution apparatus permits or blocks access of the access subject according to a policy delivered by the policy control apparatus, to dynamically adjust access permission of the access subject for an application system.

A security defense mode in the zero trust architecture can be implemented based on a trusted and reliable terminal. If the terminal is unreliable and insecure, the entire zero trust architecture cannot function. Therefore, determining whether the terminal in the zero trust architecture is trusted is a basis and a key step for the zero trust architecture to function.

In a conventional method, after an environment awareness client is deployed in a terminal, the terminal sends a registration message to a policy detection apparatus. After receiving the registration message, the policy detection apparatus determines that the terminal is a trusted terminal. Likewise, when the environment awareness client is uninstalled from the terminal, the terminal sends an uninstall message to the policy detection apparatus. After receiving the uninstall message sent by the terminal, the policy detection apparatus determines that the terminal is an untrusted terminal. In other words, the policy detection apparatus passively receives the registration message or the uninstall message sent by the terminal, and determines, based on the registration message or the uninstall message, whether the terminal is trusted. However, in some cases, the policy detection apparatus possibly cannot correctly determine whether the terminal is a trusted terminal or an untrusted terminal, resulting in a security risk in a zero trust system. For example, after the environment awareness client is deployed in the terminal, if the environment awareness client is uninstalled from the terminal when a network is disconnected, the policy detection apparatus cannot receive the uninstall message. For another example, if the environment awareness client is abnormally uninstalled because an operating system is re-deployed in the terminal, and the like, the policy detection apparatus cannot receive the uninstall message sent by the environment awareness client. In these cases, because the policy detection apparatus does not receive the uninstall message, the policy detection apparatus still determines that the terminal is a trusted terminal, but actually the terminal is untrusted currently. In the zero trust architecture in the conventional method, whether the terminal is a trusted terminal cannot be correctly determined, and consequently the entire zero trust architecture cannot function.

### SUMMARY

Embodiments of this application provide a method for determining a trusted terminal. The method is applied to a zero trust network security architecture, to improve security of the zero trust architecture.

According to a first aspect, an embodiment of this application provides a method for determining a trusted terminal. The method is applied to a terminal in a zero trust architecture, an environment awareness client is installed in the terminal, and the method includes: The terminal sends an authentication request to a policy control apparatus, where the authentication request carries authentication information, and the authentication information is used by the policy control apparatus to perform authentication on the terminal based on the authentication information. The terminal receives a trust identifier from the policy control apparatus, and saves the trust identifier. Finally, when the terminal accesses an application server, the environment awareness client in the terminal obtains the trust identifier from the terminal and adds the trust identifier to a first access request, and the terminal sends the first access request, so that the policy control apparatus determines that the terminal is a trusted terminal. In this embodiment, the policy control apparatus performs identity authentication on the terminal. After the identity authentication on the terminal succeeds, the policy control apparatus generates a trust identifier, and sends the trust identifier to the terminal. The terminal saves the trust identifier. When the terminal needs to access the application server, the environment awareness client installed in the terminal obtains the trust identifier, and then the terminal sends an access request that carries the trust identifier to the policy control apparatus, so that the policy control apparatus determines that the terminal is a trusted terminal. Regardless of whether the user actively uninstalls the environment awareness client, or the environment awareness client is passively uninstalled due to reasons such as system reinstallation of the terminal, the terminal cannot send the trust identifier to the policy control apparatus. As long as the policy control apparatus cannot obtain the trust identifier from the terminal, it indicates that the terminal is no longer reliable. To be specific, the environment awareness client cannot collect a dangerous event of the terminal. In this case, the policy control apparatus determines that the terminal is an untrusted terminal. The policy control apparatus correctly determines, based on the trust identifier from the terminal, whether the terminal is a trusted terminal, to improve security of the zero trust architecture, so that the zero trust architecture functions properly.

In an optional implementation, the trust identifier is generated based on dynamic information related to the terminal. This manner of generating the trust identifier based on the dynamic information related to the terminal can ensure that the trust identifier saved in the terminal is different each time after the terminal is authenticated, that is, the trust identifier is dynamic. This improves security of a zero trust system.

In an optional implementation, the dynamic information related to the terminal includes an IP address and/or a session identifier of the terminal, and the session identifier identifies a session established between the policy control apparatus and the terminal according to HTTP after the terminal is authenticated. In one aspect, the IP address of the terminal is dynamically allocated, and in another aspect, the session identifier uniquely identifies the session established between the policy control apparatus and the terminal based on the HTTP protocol. The dynamic information includes the IP address and/or the session identifier of the terminal. This not only ensures uniqueness of the trust identifier, but also ensures dynamic performance of the trust identifier.

In an optional implementation, the trust identifier is saved by the terminal in a cookie cookie of a browser of the terminal, and the method further includes: when the terminal accesses the application server, obtaining the trust identifier from the cookie of the browser, and adding the trust identifier to the first access request. The terminal saves the trust identifier in the cookie of the browser of the terminal, to ensure that the trust identifier has a validity period. After the browser exits, the cookie disappears. In this way, the trust identifier saved in the cookie is also deleted. In other words, the trust identifier becomes invalid. Therefore, a malicious attacker is prevented from forging the terminal after obtaining the trust identifier and attacking the policy control apparatus.

In an optional implementation, the first access request further carries a user token token, and the token is allocated by the policy control apparatus to the terminal after the terminal is authenticated. The token is used to trigger a process of performing authentication on the terminal by the policy control apparatus, to reduce operations of frequently querying a user name and a password in a database by the policy control apparatus.

In an optional implementation, before the terminal sends the authentication request to the policy control apparatus, the method further includes: The terminal sends a second access request, where the second access request does not carry the token, the policy control apparatus is triggered to send an authentication page to the terminal after the second access request is redirected by a policy execution apparatus to the policy control apparatus, and the authentication request is sent after the terminal receives the authentication page. In a case that it is not determined whether the terminal is a trusted terminal, the second access request from the terminal arrives at the policy execution apparatus. When the second access request is a request for the terminal to access the application server for the first time, the second access request is redirected by the policy execution apparatus to the policy control apparatus, to trigger an interactive authentication process between the policy control apparatus and the terminal, to improve security of the zero trust architecture.

In an optional implementation, the first access request further includes an identifier of the terminal, the identifier is used by a policy detection apparatus to compare the identifier with a registration identifier of the terminal, and when the identifier is the same as the registration identifier of the terminal, the policy detection apparatus sends the trust identifier carried in the first access request to the policy control apparatus. The policy detection apparatus verifies an identity of the terminal based on the identifier, and the policy detection apparatus sends the first access request to the policy control apparatus only after the identity verification of the terminal succeeds. This improves security of the zero trust architecture.

According to a second aspect, an embodiment of this application provides a method for determining a trusted terminal. The method is applied to a policy control apparatus and includes: The policy control apparatus receives an authentication request from a terminal, where the authentication request carries authentication information. The policy control apparatus performs authentication on the terminal based on the authentication information. The policy control apparatus generates a trust identifier for the terminal after the terminal is authenticated, and sends the trust identifier to the terminal. The policy control apparatus receives a first access request from the terminal when the terminal accesses an application server, where the first access request carries a trust identifier. The policy control apparatus compares the trust identifier carried in the first access request with the generated trust identifier, and if the trust identifier carried in the first access request is the same as the generated trust identifier, the policy control apparatus determines that the terminal is a trusted terminal. The policy control apparatus correctly determines, based on the trust identifier from the terminal, that the terminal is a trusted terminal, to improve security of the zero trust architecture, so that the zero trust architecture functions properly.

In an optional implementation, the policy control apparatus generates the trust identifier based on dynamic information related to the terminal. Therefore, the trust identifier saved in the terminal is different each time after the terminal is authenticated, to ensure dynamic performance of the trust identifier, and further improve security of a zero trust system.

In an optional implementation, the generating the trust identifier based on dynamic information related to the terminal further includes: The policy control apparatus establishes a session with the terminal according to HTTP. Then, the policy control apparatus generates the trust identifier based on an IP address of the terminal and a session identifier of the session. The trust identifier generated by the policy control apparatus is unique, and each time the terminal is authenticated, the IP address of the terminal is different from an IP address after previous authentication, and the session identifier is also different from a session identifier after the previous authentication, to ensure dynamic performance of the trust identifier.

In an optional implementation, the method further includes: The policy control apparatus receives a second access request, where the second access request does not carry a trust identifier, indicating that an environment awareness client in the terminal has been uninstalled. In this case, the environment awareness client cannot collect a dangerous event of the terminal. Therefore, the terminal is no longer reliable, and the policy control apparatus determines that the terminal is an untrusted terminal. Alternatively, if a trust identifier carried in the second access request is different from the generated trust identifier, it indicates that the trust identifier is forged by an attacker. In this case, the terminal has a potential risk, and the policy control apparatus determines that the terminal is an untrusted terminal.

According to a third aspect, an embodiment of this application provides a method for determining a trusted terminal. The method is applied to a policy execution apparatus and includes: The policy execution apparatus receives an access request from a terminal. When the access request does not carry a token allocated by a policy control apparatus, which indicates that the access request is a request for first access, the policy execution apparatus redirects the second access request to the policy control apparatus, where the policy control apparatus is triggered to send an authentication page to the terminal after the access request is redirected by the policy execution apparatus to the policy control apparatus, the authentication page is for guiding the terminal to send an authentication request to the policy control apparatus, and the authentication request carries authentication information. When it is not determined whether the terminal is a trusted terminal, the second access request from the terminal arrives at the policy execution apparatus. When the second access request is a request for the terminal to access the application server for the first time, the second access request is redirected by the policy execution apparatus to the policy control apparatus, to trigger an interactive authentication process between the policy control apparatus and the terminal, to improve security of a zero trust architecture.

According to a fourth aspect, an embodiment of this application provides a method for determining a trusted terminal. The method is applied to a policy detection apparatus and includes: The policy detection apparatus receives a first access request from a terminal, where the first access request carries an identifier and a trust identifier of the terminal, and the trust identifier is sent by a policy control apparatus to the terminal after the terminal is authenticated. The policy detection apparatus compares the identifier with a registration identifier of the terminal. When the identifier is the same as the registration identifier of the terminal, the policy detection apparatus sends the trust identifier carried in the access request to the policy control apparatus, where the trust identifier is used by the policy control apparatus to determine that the terminal is a trusted terminal. The policy detection apparatus sends the first access request to the policy control apparatus only after identity verification of the terminal succeeds. This improves security of a zero trust architecture.

In an optional implementation, the trust identifier is generated based on dynamic information related to the terminal.

In an optional implementation, the dynamic information related to the terminal includes an IP address and/or a session identifier of the terminal, and the session identifier identifies a generated identifier of a session established between the policy control apparatus and the terminal according to HTTP after the terminal is authenticated.

According to a fifth aspect, an embodiment of this application provides a terminal. The terminal includes: a sending module, configured to send an authentication request to a policy control apparatus, where the authentication request carries authentication information, and the authentication information is used by the policy control apparatus to perform authentication on the terminal based on the authentication information; a receiving module, configured to receive a trust identifier from the policy control apparatus, where the trust identifier is sent by the policy control apparatus after the terminal is authenticated; and a saving module, configured to save the trust identifier. The sending module is further configured to send a first access request when the terminal accesses an application server, where the first access request carries the trust identifier, so that the policy control apparatus determines that the terminal is a trusted terminal.

In an optional implementation, the trust identifier is saved by the terminal in a cookie cookie of a browser of the terminal, and the processing module is further configured to: when the terminal accesses the application server, obtain the trust identifier from the cookie of the browser, and add the trust identifier to the first access request.

In an optional implementation, the sending module is further configured to send a second access request, where the second access request does not carry the token, the policy control apparatus is triggered to send an authentication page to the terminal after the second access request is redirected by a policy execution apparatus to the policy control apparatus, and the authentication request is sent after the terminal receives the authentication page.

According to a sixth aspect, an embodiment of this application provides a policy control apparatus, where the policy control apparatus includes: a receiving module, configured to receive an authentication request from a terminal, where the authentication request carries authentication information; a processing module, configured to perform authentication on the terminal based on the authentication information, and generate a trust identifier after the terminal is authenticated; and a sending module, configured to send the trust identifier to the terminal. The receiving module is configured to receive a first access request from the terminal, where the first access request carries a trust identifier. The processing module is further configured to compare the trust identifier carried in the first access request with the generated trust identifier, and if the trust identifier carried in the first access request is the same as the generated trust identifier, determine that the terminal is a trusted terminal.

In an optional implementation, the processing module is further configured to generate the trust identifier based on dynamic information related to the terminal.

In an optional implementation, the processing module is further configured to establish a session with the terminal according to HTTP; and generate the trust identifier based on an IP address of the terminal and a session identifier of the session.

In an optional implementation, the receiving module is further configured to receive a second access request. The processing module is further configured to determine that the terminal is an untrusted terminal when the second access request does not carry a trust identifier or a trust identifier carried in the second access request is different from the generated trust identifier.

According to a seventh aspect, an embodiment of this application provides a policy execution apparatus. The policy execution apparatus includes a receiving module, configured to receive an access request from a terminal; and a processing module, configured to: when the second access request does not carry a token allocated by a policy control apparatus, redirect, by the policy execution apparatus, the second access request to the policy control apparatus, where the policy control apparatus is triggered to send an authentication page to the terminal after the access request is redirected by the policy execution apparatus to the policy control apparatus, the authentication page is for guiding the terminal to send an authentication request to the policy control apparatus, and the authentication request carries authentication information.

According to an eighth aspect, an embodiment of this application provides a policy detection apparatus. The policy detection apparatus includes: a receiving module, configured to receive a first access request from a terminal, where the first access request carries an identifier and a trust identifier of the terminal, and the trust identifier is sent by a policy control apparatus to the terminal after the terminal is authenticated; and a processing module, configured to compare the identifier with a registration identifier of the terminal. The processing module is further configured to: when the identifier is the same as the registration identifier of the terminal, send the trust identifier carried in the first access request to the policy control apparatus, where the trust identifier is used by the policy control apparatus to determine that the terminal is a trusted terminal.

According to a ninth aspect, an embodiment of this application provides a system for determining a trusted terminal. The system includes: a terminal, configured to send an authentication request to a policy control apparatus, where the authentication request carries authentication information; and the policy control apparatus, configured to: perform authentication on the terminal based on the authentication information; generate a trust identifier after the terminal is authenticated; and send the trust identifier to the terminal. The terminal is further configured to receive the trust identifier and save the trust identifier; and send a first access request when the terminal accesses an application server, where the first access request carries a trust identifier of the terminal. The policy control apparatus is further configured to compare the trust identifier carried in the first access request with the generated trust identifier, and if the trust identifier carried in the first access request is the same as the generated trust identifier, determine that the terminal is a trusted terminal.

In an optional implementation, the first access request carries an identifier of the terminal, and the system further includes a policy detection apparatus, where the policy detection apparatus is configured to: receive the first access request from the terminal; compare the identifier of the terminal with a registration identifier of the terminal; and send the trust identifier carried in the first access request to the policy control apparatus when the identifier is the same as the registration identifier.

In an optional implementation, the first access request further carries a user token token, and the token is allocated by the policy control apparatus to the terminal after the terminal is authenticated. Before the terminal sends the authentication request, the terminal is further configured to send a second access request, where the second access request does not carry the token. The system further includes a policy execution apparatus. The policy execution apparatus is configured to receive the second access request from the terminal, and redirect the second access request to the policy control apparatus. The policy control apparatus is further configured to send an authentication page to the terminal based on the second access request, where the authentication page is for guiding the terminal to send the authentication request to the policy control apparatus.

In an optional implementation, the policy execution apparatus is a network forwarding device, and the network forwarding device includes a firewall, a switch, a router, a gateway, and a bridge. The policy control apparatus and the policy detection apparatus are computer cluster devices, and both the policy execution apparatus and the policy detection apparatus are communicatively connected to the policy control apparatus.

In an optional implementation, the policy control apparatus is further configured to generate the trust identifier based on dynamic information related to the terminal.

In an optional implementation, the policy control apparatus is further configured to establish a session with the terminal according to HTTP; and generate the trust identifier based on an IP address of the terminal and a session identifier of the session.

According to a tenth aspect, an embodiment of this application provides an electronic device, including a processor. The processor is coupled to at least one memory, and the processor is configured to read a computer program stored in the at least one memory, so that the electronic device performs the method according to the first aspect, the method according to the second aspect, the method according to the third aspect, or the method according to the fourth aspect.

According to a tenth aspect, an embodiment of this application provides a computer-readable medium. The computer-readable storage medium is configured to store a computer program, and when the computer program is run on a computer, the computer is enabled to perform the method according to the first aspect, the method according to the second aspect, the method according to the third aspect, or the method according to the fourth aspect.

According to an eleventh aspect, an embodiment of this application provides a chip, including a processor and a communication interface. The processor is configured to read instructions to perform the method according to the first aspect, the method according to the second aspect, the method according to the third aspect, or the method according to the fourth aspect.

According to a twelfth aspect, an embodiment of this application provides a computer program product. When the computer program product is executed by a computer, the method according to the first aspect, the method according to the second aspect, the method according to the third aspect, or the method according to the fourth aspect is implemented.

### BRIEF DESCRIPTION OF DRAWINGS

FIG. 1A and FIG. 1B are schematic diagrams of scenarios in two embodiments of a zero trust architecture according to an embodiment of this application;
FIG. 2A, FIG. 2B, FIG. 2C, FIG. 2D, FIG. 2E, and FIG. 2F are step flowcharts in a plurality of embodiments of a method for determining a trusted terminal according to an embodiment of this application;
FIG. 3 is a schematic diagram of a structure in an embodiment of a terminal according to an embodiment of this application;
FIG. 4 is a schematic diagram of a structure in another embodiment of a terminal according to an embodiment of this application;
FIG. 5 is a schematic diagram of a structure in an embodiment of an apparatus according to an embodiment of this application; and
FIG. 6 is a schematic diagram of a structure in another embodiment of an apparatus according to an embodiment of this application.

### DESCRIPTION OF EMBODIMENTS

The following describes the technical solutions in embodiments of this application with reference to the accompanying drawings in embodiments of this application. A term "and/or" in this application indicates that three relationships exist. For example, A and/or B indicates three cases: only A exists, both A and B exist, and only B exists. In the specification, claims, and accompanying drawings of this application, terms "first", "second", and the like are intended to distinguish between objects but do not necessarily indicate a specific order or sequence. It should be understood that the terms used in such a manner are interchangeable in proper circumstances.

An embodiment of this application provides a method for determining a trusted terminal. The method is applied to a zero trust network security architecture (also referred to as a "zero trust architecture" or a "zero trust system"). The zero trust architecture includes a terminal, a policy detection apparatus, a policy execution apparatus, and a policy control apparatus. An environment awareness client is deployed in the terminal. In the zero trust architecture, the environment awareness client deployed in the terminal is configured to collect a security risk event (for example, a Trojan horse or virus attack) of the terminal in real time. The policy detection apparatus is configured to obtain a network security risk event of the terminal, and evaluates a security risk of the terminal based on the security risk event, to obtain an evaluation result. The policy control apparatus is configured to adjust an access right of the access subject based on the evaluation result. The policy execution apparatus is configured to provide a reverse proxy for an application server, and permit or block an access request from the terminal according to a policy delivered by the policy control apparatus, so that the access right of the access subject is dynamically adjusted for the application server.

A security defense mode in the zero trust architecture can be implemented based on a trusted and reliable terminal. If a terminal is unreliable, the zero trust architecture cannot function properly. Therefore, this application provides a method for determining a trusted terminal. By using the method, it can be correctly determined that the terminal in the zero trust architecture is a trusted terminal, to improve security of the zero trust architecture.

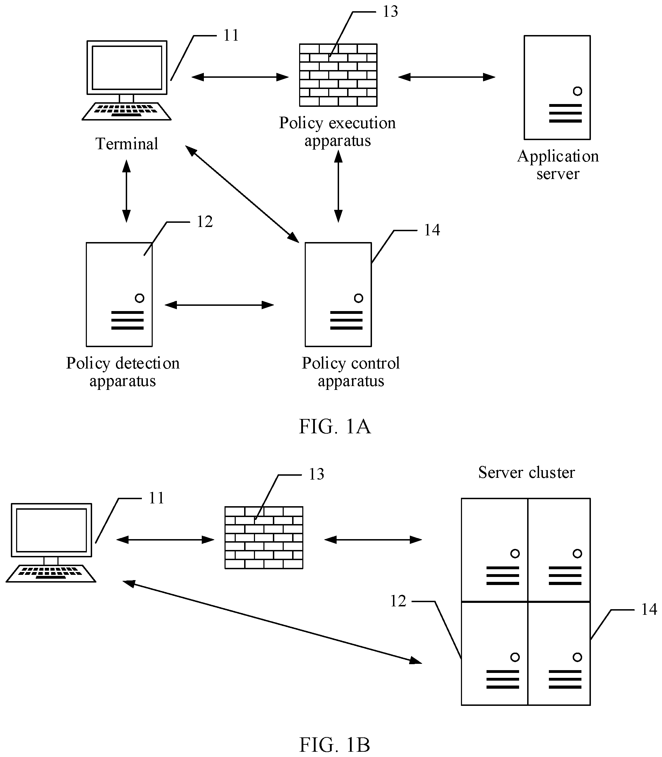

FIG. 1A and FIG. 1B are schematic diagrams of application scenarios of a zero trust architecture according to an embodiment of this application. Refer to FIG. 1A and FIG. 1B. The zero trust architecture includes a terminal 11, a policy detection apparatus 12, a policy execution apparatus 13, and a policy control apparatus 14, where an environment awareness client is deployed in the terminal 11. The policy control apparatus 14, the policy execution apparatus 13, and the policy detection apparatus 12 are all communicatively connected to the terminal 11. The policy execution apparatus 13 and the policy detection apparatus 12 are both communicatively connected to the policy control apparatus 14, and the policy execution apparatus 13 is communicatively connected to an application server. The terminal 11 in this application is a terminal that supports a Hypertext Transfer Protocol (hypertext transfer protocol, HTTP). Optionally, the terminal 11 includes but is not limited to a mobile phone (mobile phone), a pad (Pad), a computer, a personal computer (personal computer, PC), a terminal in an Internet of Things (internet of things, loT) system, and the like. The policy execution apparatus 13 is a network forwarding device, or the policy execution apparatus 13 is a function module deployed in the network forwarding device. The network forwarding device includes but is not limited to a firewall, a switch, a router, a gateway, a bridge, and the like. In this embodiment of this application, an example in which the policy execution apparatus 13 is a firewall is used for description. The policy detection apparatus 12 and the policy control apparatus 14 are computer cluster devices, or the policy detection apparatus 12 and the policy control apparatus 14 are function modules deployed in a computer cluster device. In this application, an example in which the policy detection apparatus 12 and the policy control apparatus 14 are servers is used for description. Optionally, as shown in FIG. 1A, the policy detection apparatus 12 and the policy control apparatus 14 are separately deployed. Alternatively, as shown in FIG. 1B, the policy detection apparatus 12, the policy control apparatus 14, and the application server are centrally deployed in a server cluster.

Further, functions of the apparatuses in the zero trust architecture in this application are described.

The policy execution apparatus is configured to determine, based on obtained access traffic generated when the terminal accesses the application server, whether the terminal accesses the application server for the first time; and when the terminal accesses the application server for the first time, redirect an access request that is from the terminal to the policy control apparatus, to trigger an interactive authentication process between the policy control apparatus and the terminal.

The policy control apparatus is configured to generate a trust identifier for the terminal after the terminal is authenticated, and send the trust identifier to the terminal.

The environment awareness client is configured to obtain the trust identifier from a storage location (for example, a cookie of a browser) of the trust identifier inside the terminal.

The policy detection apparatus is configured to verify an identity of the terminal based on an identifier of the terminal and a registration identifier of the terminal.

The policy control apparatus is further configured to: after the identity verification on the terminal succeeds, determine, based on the trust identifier from the terminal and the generated trust identifier, whether the terminal is a trusted terminal.

The policy execution apparatus is configured to provide a reverse proxy for the application server, and hide the application server from the terminal. When the policy control apparatus determines that the terminal is a trusted terminal, the policy execution apparatus receives a first indication sent by the policy control apparatus, continues to access the application server as a proxy of the terminal, and then feeds back a data resource to the terminal. When the policy control apparatus determines that the terminal is an untrusted terminal, the policy execution apparatus receives a second indication sent by the policy control apparatus, and the policy execution apparatus blocks, based on the second indication, the terminal from accessing the application server (in other words, the policy execution apparatus does not continue to access the application server).

In this embodiment of this application, the policy control apparatus performs identity authentication on the terminal. After the identity authentication on the terminal succeeds, the policy control apparatus generates a trust identifier, and sends the trust identifier to the terminal. The terminal saves the trust identifier. When the terminal needs to access the application server, the environment awareness client installed in the terminal obtains the trust identifier, and then the terminal sends an access request that carries the trust identifier to the policy control apparatus, so that the policy control apparatus determines that the terminal is a trusted terminal. Regardless of whether the user actively uninstalls the environment awareness client, or the environment awareness client is passively uninstalled due to reasons such as system reinstallation of the terminal, the terminal cannot send the trust identifier to the policy control apparatus. As long as the policy control apparatus cannot obtain the trust identifier from the terminal, it indicates that the terminal is no longer reliable. To be specific, the environment awareness client cannot collect a dangerous event of the terminal. In this case, the policy control apparatus determines that the terminal is an untrusted terminal. The policy control apparatus correctly determines, based on the trust identifier from the terminal, whether the terminal is a trusted terminal, to improve security of the zero trust architecture, so that the zero trust architecture functions properly.

For better understanding of this application, terms in this application are first described.

The trust identifier is a character string generated by the policy control apparatus, and is used by the policy control apparatus to uniquely identify the terminal. Optionally, the trust identifier has a validity period.

User token (token): It is a character string generated by a server as a token for a client to send a request. When the client accesses the server for the first time, the server generates a token and returns the token to the client. Subsequently, the client only needs to carry the token to request data, without the need to carry a user name and a password again. In this way, the pressure on the server is reduced, and operations of frequently querying the user name and the password in a database are reduced. In this embodiment of this application, the policy control apparatus serves as a server to allocate the token to the terminal.

Redirect (redirect): A network request is redirected, so that the network request is transferred to another location.

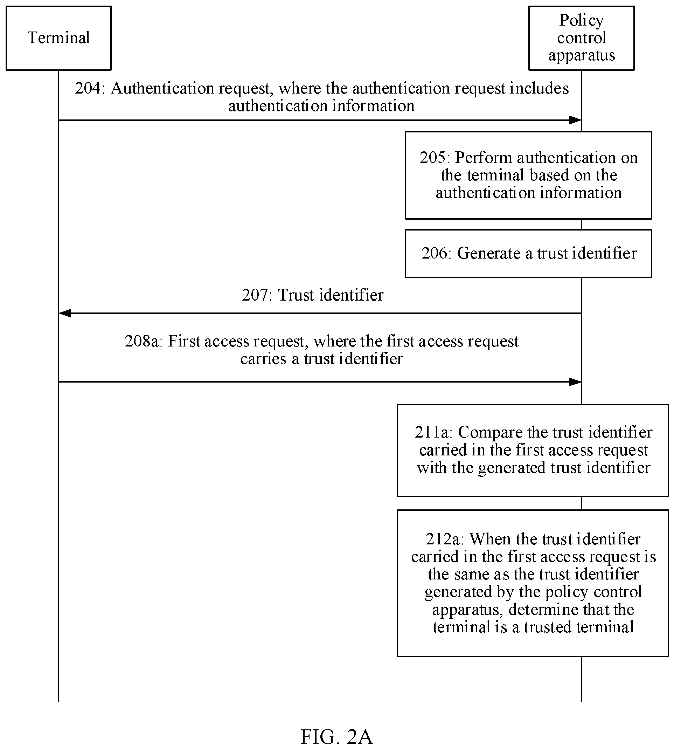

Refer to FIG. 2A. Embodiments of this application provide an embodiment of a method for determining a trusted terminal. The method includes step 204 to step 207, step 208a, step 21 1a, and step 212a.

Step 204: A terminal sends an authentication request to a policy control apparatus, where the authentication request includes authentication information.

The terminal receives the authentication information input by a user, and the terminal sends the authentication request to the policy control apparatus, where the authentication request carries the authentication information. The authentication information is a user name and a password, or the authentication information is biological information of the user, where the biological information of the user includes but is not limited to face information, voice print information, fingerprint information, and the like. The authentication information is not limited in this embodiment. Step 205: The policy control apparatus receives the authentication request from the terminal, and performs authentication on the terminal based on the authentication information.

The policy control apparatus obtains the authentication information in the authentication request, where an example in which the authentication information is the user name and the password is used for description. The policy control apparatus obtains the user name and the password in the authentication request, and the policy control apparatus queries a database. When the policy control apparatus finds the user name and the password in the database, the policy control apparatus determines that the terminal is authenticated. When the policy control apparatus does not find the user name and the password in the database, the policy control apparatus determines that the terminal cannot be authenticated.

Step 206: After the terminal is authenticated, the policy control apparatus generates a trust identifier.

After the terminal is authenticated, the policy control apparatus generates the trust identifier for the terminal and saves the trust identifier. The policy control apparatus sends the trust identifier to the terminal. Optionally, the policy control apparatus generates the trust identifier based on dynamic information related to the terminal. In other words, each time after the terminal is authenticated, trust identifiers generated by the policy control apparatus for the same terminal are different, to ensure dynamic performance of the trust identifier, and further improve security of a zero trust system.

For example, the dynamic information related to the terminal includes an IP address and/or a session identifier (session ID) of the terminal. The trust identifier is a character string generated through encrypting the IP address and/or the session ID of the terminal by the policy control apparatus, and the policy control apparatus uses the character string as the trust identifier.

The session ID is described in an example. After the terminal is authenticated, a session (session) is established between the policy control apparatus and the terminal according to HTTP. Generally, the session corresponds to a browser in the terminal, and the policy control apparatus generates the session ID to uniquely identify the session, so that the browser in the terminal is in a one-to-one correspondence with the session.

It should be noted that the trust identifier in this embodiment is merely an example for description, and does not constitute a limitation on the trust identifier. Optionally, the trust identifier includes the dynamic information of the terminal and static information of the terminal (for example, an identifier of the terminal). For example, the trust identifier is a character string generated through encrypting the IP address of the terminal, the session ID, and the identifier of the terminal by the policy control apparatus. In this embodiment, only that the trust identifier uniquely identifies the terminal needs to be ensured, and the trust is not specifically limited.

Step 207: The terminal receives the trust identifier sent by the policy control apparatus, and saves the trust identifier.

The terminal receives the trust identifier sent by the policy control apparatus, and then the terminal saves the trust identifier. This embodiment of this application does not limit a specific storage location at which the terminal saves the trust identifier. For example, the terminal saves the trust identifier in a hidden file in an installation directory of an environment awareness client, or saves the trust identifier in a configuration file in an operating system directory. Optionally, the terminal writes the trust identifier into a cookie of the browser. The terminal writes the trust identifier into the browser to ensure that the trust identifier has a validity period. After the browser exits, the cookie disappears. In this way, the trust identifier saved in the cookie is also deleted. In other words, the trust identifier becomes invalid. Therefore, a malicious attacker is prevented from forging the terminal after obtaining the trust identifier and attacking the policy control apparatus. In this embodiment, each time after the terminal is authenticated, the terminal receives a trust identifier sent by the policy control apparatus, so that each time after the terminal is authenticated, a new trust identifier is saved in the cookie, to improve security of the zero trust system.

Step 208a: When the terminal accesses an application server, the terminal sends a first access request, where the first access request carries the trust identifier.

When the terminal accesses the application server, the environment awareness client in the terminal obtains the trust identifier from the cookie, and adds the trust identifier to the first access request. The terminal obtains the trust identifier through the environment awareness client, so that the policy control apparatus determines whether the environment awareness client in the terminal is uninstalled. For example, if the environment awareness client is uninstalled, regardless of whether the environment awareness client is actively uninstalled by the user or is passively uninstalled due to another reason, the first access request does not carry the trust identifier.

Step 211 a: The policy control apparatus receives the first access request, and compares the trust identifier carried in the first access request with the generated trust identifier.

The policy control apparatus compares the trust identifier carried in the first access request with the identifier generated by the policy control apparatus (the identifier generated by the policy control apparatus in step 206), to prevent the trust identifier in the first access request from being forged by a malicious attacker.

Step 212a: When the trust identifier carried in the first access request is the same as the trust identifier generated by the policy control apparatus, the policy control apparatus determines that the terminal is a trusted terminal.

When the trust identifier carried in the first access request is the same as the trust identifier generated by the policy control apparatus, it indicates that the environment awareness client is deployed in the terminal, that the environment awareness client is secure, and that no spoofing attack is performed by an attacker. After the policy control apparatus determines that the terminal is a trusted terminal, the policy control apparatus sends a first indication to a policy execution apparatus, where the first indication indicates that the terminal is a trusted terminal. The policy execution apparatus executes a reverse proxy function of the application server, and the policy execution apparatus continues to access the application server based on the first indication, and sends, to the terminal, a data resource fed back by the application server.

In this embodiment of this application, after the terminal is authenticated, the policy control apparatus allocates the trust identifier to the terminal, and sends the trust identifier to the terminal, and the terminal saves the trust identifier. When the terminal accesses the application server, the terminal adds the trust identifier to the sent first access request. The policy control apparatus obtains the trust identifier carried in the first access request, and then compares the trust identifier carried in the first access request with the generated trust identifier. When the trust identifier carried in the first access request is the same as the generated trust identifier, it indicates that the environment awareness client in the terminal is not uninstalled, and the trust identifier is not forged (in other words, the terminal is not attacked). The policy control apparatus determines that the terminal is a trusted terminal. The terminal is a trusted terminal. To be specific, the terminal can detect a running environment (for example, whether there is a risk event) of the terminal through the environment awareness client, to improve security of the zero trust architecture, so that the zero trust architecture functions properly.

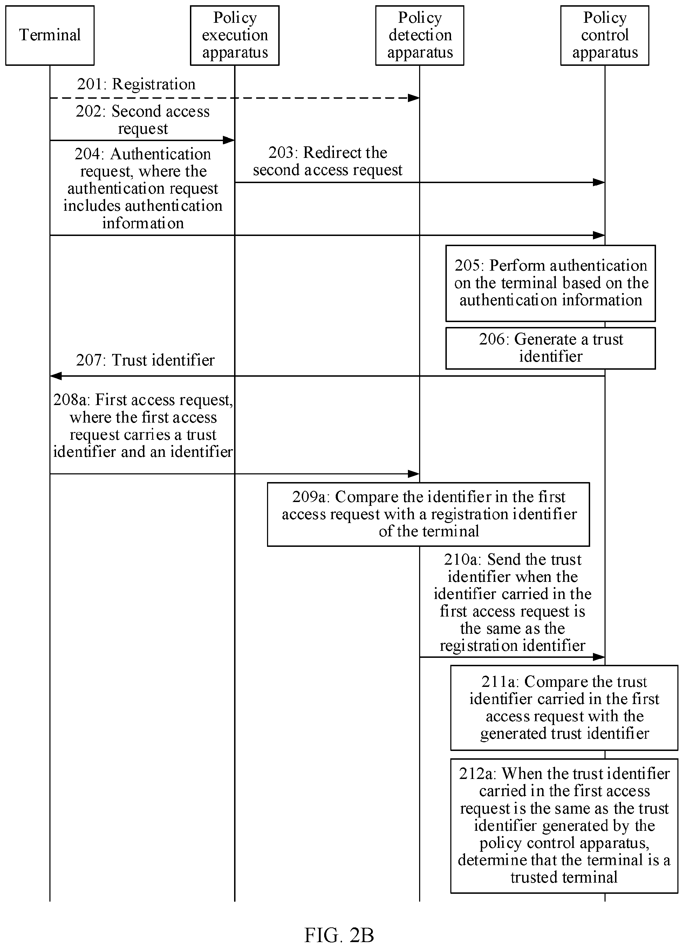

Optionally, refer to FIG. 2B. FIG. 2B is a step flowchart of another embodiment of determining a trusted terminal according to an embodiment of this application. Before a terminal accesses an application server, to ensure that an environment awareness client has been installed in the terminal in a zero trust architecture, the terminal registers with a policy detection apparatus after the environment awareness client is installed in the terminal, to notify the policy detection apparatus that the environment awareness client has been installed in the terminal. The terminal interacts with the policy detection apparatus to complete a registration process. The registration process is shown in step 201.

Step 201: The terminal registers with the policy detection apparatus.

First, the environment awareness client is installed in the terminal. The environment awareness client then sends a registration message to the policy detection apparatus, where the registration message carries an identifier of the terminal. The identifier of the terminal uniquely identifies the terminal. Optionally, the identifier is pre-generated by the terminal. Alternatively, the identifier is generated when the terminal sends the registration message. This is not specifically limited. The terminal generates the identifier based on static information of the terminal. For example, the terminal generates the identifier based on a hardware identifier (for example, a processor identifier) of the terminal and/or a media access control (media access control, MAC) address of the terminal. In this embodiment, the identifier is not limited, provided that the identifier uniquely identifies the terminal. Finally, the policy detection apparatus saves the identifier of the terminal, and completes registration of the terminal.

The policy detection apparatus saves the identifier of the terminal, and the policy detection apparatus uses the identifier of the terminal as a registration identifier, to complete the registration process of the terminal. It may be understood that the registration identifier saved by the policy detection apparatus is the identifier of the terminal. The identifier saved by the policy detection apparatus is referred to as the "registration identifier" of the terminal only to indicate that the terminal has completed the registration.

It should be noted that step 201 is an optional step, and does not need to be performed each time the application server is accessed. When the terminal completes the registration but is not authenticated, step 202 is directly performed when the application server is accessed.

Optionally, to improve security of the zero trust architecture, data of a service flow from the terminal arrives at a policy execution apparatus. The policy execution apparatus is configured to detect whether an access request from the terminal is a request for first access. When the policy execution apparatus detects that the access request from the terminal is the request for the first access, the policy execution apparatus redirects the access request that is from the terminal to a policy control apparatus, to trigger an interactive authentication process between the policy control apparatus and the terminal. The policy execution apparatus redirects the access request that is from the terminal to the policy control apparatus. This is shown in step 202 and step 203.

Step 202: When the terminal accesses the application server, the terminal sends a second access request, and the policy execution apparatus obtains the second access request from the terminal.

Currently, it is not determined whether the terminal is a trusted terminal, and the data of the service flow from the terminal arrives at the policy execution apparatus. The policy execution apparatus provides a reverse proxy for the application server. The policy execution apparatus provides the reverse proxy to hide the application server and ensure security of the application server.

The policy execution apparatus receives the second access request, and detects whether the second access request includes a token allocated by the policy control apparatus (in other words, detects whether the second access request is a request for first access). When the second access request does not carry the token, it indicates that the terminal accesses the application server for the first time.

Step 203: When the policy execution apparatus detects that the second access request does not carry the token, the policy execution apparatus redirects the second access request to the policy control apparatus.

When the second access request does not carry the token, it indicates that the terminal accesses the application server for the first time after a browser in the terminal is started. The terminal accesses the application server for the first time, and the terminal has not been authenticated. In this case, the policy execution apparatus redirects the second access request to the policy control apparatus. The policy execution apparatus redirects the second access request to the policy control apparatus to trigger an interactive authentication process between the policy control apparatus and the terminal, to complete a process in which the policy control apparatus authenticates the terminal.

For example, the second access request carries a destination address and a source address. The destination address is a domain name (for example, sina.com) of an application server to be accessed by the terminal. The source address is an internet protocol (internet protocol, IP) address of the terminal. The process in which the policy execution apparatus redirects the second access request to the policy control apparatus is described in an example.

The policy execution apparatus modifies the domain name carried in the second access request to modify the second access request, and adds a domain name of the policy control apparatus to the domain name, where the modified domain name includes the domain name of the to-be-accessed application server and the domain name of the policy control apparatus. For example, the policy execution apparatus changes the domain name "sina.com" to "W3.com@sina.com". "W3.com" is the domain name of the policy control apparatus, and "sina.com" is the domain name of the application server to be accessed by the terminal. The policy execution apparatus then sends the modified second access request to the policy control apparatus. The policy control apparatus pushes a portal authentication interface to the terminal based on the source address (namely, the IP address of the terminal) in the second access request, where the authentication interface is for guiding the terminal to send an authentication request to the policy control apparatus.

It should be noted that, step 202 and step 203 are the process in which the policy execution apparatus redirects the access request that is from the terminal to the policy control apparatus, and an objective of step 202 and step 203 is to trigger the interactive authentication process between the policy control apparatus and the terminal. It may be understood that, that the interactive authentication process is triggered by the policy execution apparatus by redirecting the access request is an optional implementation. When the terminal needs to access the application server, the terminal sends the authentication request to the policy control apparatus, and the terminal sends the authentication request to trigger the interactive authentication process between the policy control apparatus and the terminal. After the registration of the terminal is completed, step 202 and step 203 may be omitted, and step 204 is directly performed.

Optionally, to improve security of the zero trust architecture, the policy detection apparatus needs to verify an identity of the terminal. The policy detection apparatus sends a first access request to the policy control apparatus only after the identity verification of the terminal succeeds. In this embodiment, the first access request in step 208a further carries the identifier of the terminal, and the identifier of the terminal is used by the policy detection apparatus to verify the identity of the terminal. After step 208a and before step 211a, the process in which the policy detection apparatus performs identity verification on the terminal is shown in step 209a and step 210a.

Step 209a: The policy detection apparatus obtains the first access request from the terminal, and compares the identifier in the first access request with the registration identifier of the terminal.

In the foregoing step 201, the policy detection apparatus saves the registration identifier of the registered terminal. In this step, the policy detection apparatus compares the identifier in the first access request with the registration identifier of the terminal. When the identifier in the first access request is the same as the registration identifier of the terminal, step 210a is performed.

Step 210a: When the identifier carried in the first access request is the same as the registration identifier, the policy detection apparatus sends the first access request to the policy control apparatus.

After the policy detection apparatus verifies the identity of the terminal, the policy detection apparatus sends the first access request to the policy control apparatus. Optionally, after the policy detection apparatus verifies the identity of the terminal, the policy detection apparatus sends a trust identifier in the first access request to the policy control apparatus, so that the policy control apparatus determines, based on the trust identifier in the first access request, whether the terminal is a trusted terminal.

Optionally, after the terminal is authenticated, the policy control apparatus allocates a token to the terminal, and the policy control apparatus sends the token to the terminal. Optionally, in step 206, the policy control apparatus not only generates the trust identifier, but also generates the token for the terminal. The policy control apparatus sends the trust identifier and the token together to the terminal. Optionally, in step 207, the terminal receives the trust identifier and the token that are sent by the policy control apparatus, and the terminal saves the trust identifier and the token. Optionally, the terminal writes the token into a cookie of the browser.

Optionally, in step 208a, the first access request further carries the token. After step 208a and before step 212a, the following step is further included: The policy execution apparatus receives the first access request, obtains the token in the first access request, and then sends the token to the policy control apparatus. The policy execution apparatus sends the token to the policy control apparatus to trigger a process of performing authentication on the terminal by the policy control apparatus. The authentication process is as follows: The policy control apparatus compares the token carried in the first access request with the token generated by the policy control apparatus. In step 212a, when the token carried in the first access request is the same as the token generated by the policy control apparatus, and the trust identifier carried in the first access request is the same as the trust identifier generated by the policy control apparatus, the policy control apparatus determines that the terminal is a trusted terminal.

It may be understood that, after the terminal is authenticated and before the browser in the terminal exits, when the terminal needs to access the application server, for example, the terminal sends a third access request, the third access request carries the token, the trust identifier, and the identifier. The token is used by the policy execution apparatus to trigger a process of performing authentication on the terminal by the policy control apparatus. The identifier is used by the policy detection apparatus to perform an identity verification process on the terminal. The trust identifier is used by the policy control apparatus to determine that the terminal is a trusted terminal.

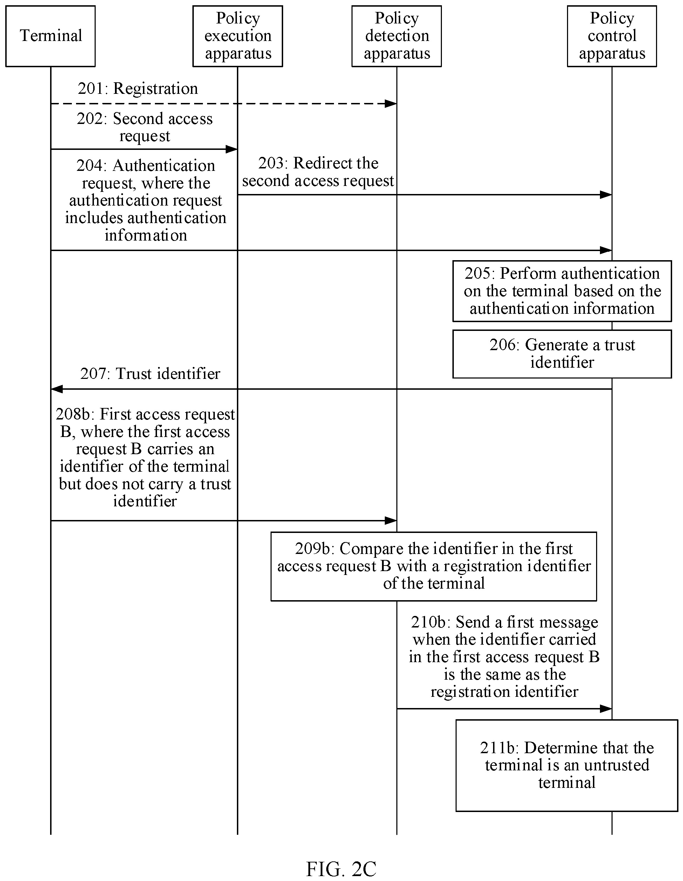

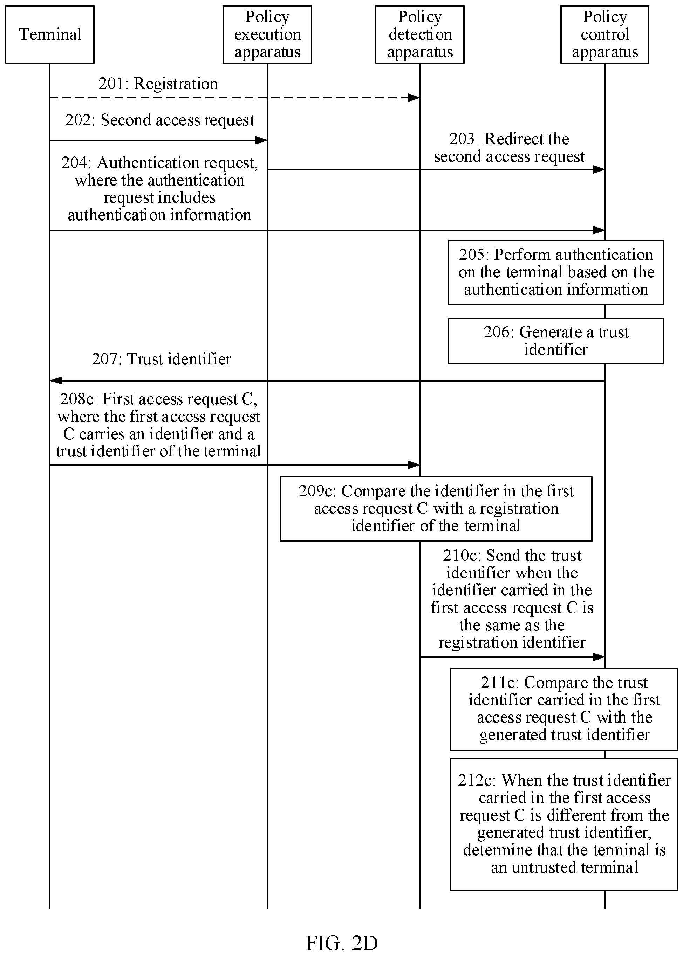

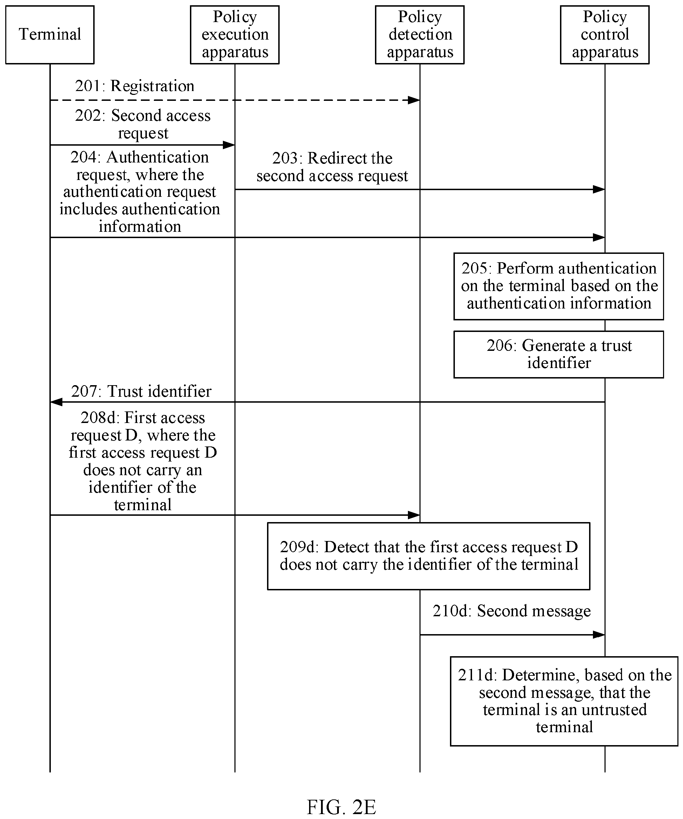

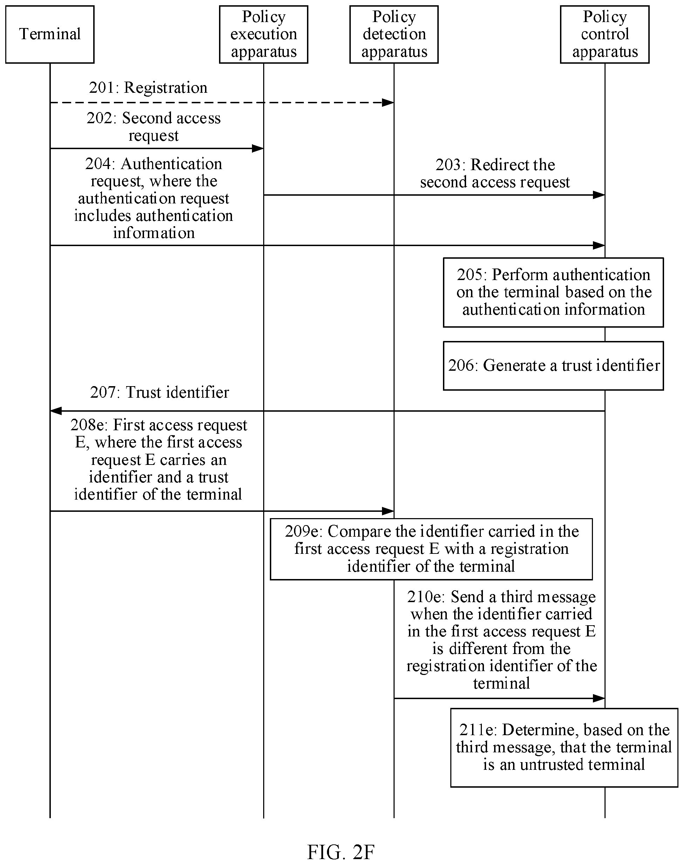

Optionally, after step 212a, after the policy control apparatus determines that the terminal is a trusted terminal, the policy execution apparatus receives a first indication sent by the policy control apparatus, and the policy execution apparatus caches the first indication. Duration (for example, 20 minutes) for caching the first indication by the policy execution apparatus is preset. Within the preset duration (20 minutes), the policy execution apparatus receives the third access request from the terminal. If the policy execution apparatus does not receive a second indication (where the second indication indicates that the terminal is an untrusted terminal) sent by the policy control apparatus, the policy execution apparatus continues to access an application server requested in the third access request. If the policy execution apparatus receives, within the preset duration, the second indication sent by the policy control apparatus, the policy execution apparatus rejects, based on the second indication, access to the application server requested in the third access request. The following embodiments corresponding to FIG. 2C, FIG. 2D, FIG. 2E, and FIG. 2F are embodiments in which the policy control apparatus sends the second indication to the policy execution apparatus (in other words, the policy control apparatus determines that the terminal is an untrusted terminal).

In this embodiment, step 204 to step 207, step 208a, step 211a, and step 212a shown in FIG. 2B are similar to the steps in the embodiment corresponding to FIG. 2A. For step 204 to step 207, step 208a, step 211a, and step 212a in this embodiment, refer to related descriptions of step 204 to step 207, step 208a, step 211a, and step 212a in the embodiment corresponding to FIG. 2A. Details are not described herein again.

It may be understood that, in the embodiment corresponding to FIG. 2B, an example is described by using a case in which the first access request (also referred to as a "first access request A") carries the identifier and the trust identifier of the terminal, and the trust identifier carried in the first access request is the same as the trust identifier generated by the policy control apparatus. In this embodiment, the first access request further includes several other cases. For example, after the identity verification performed by the policy detection apparatus on the terminal succeeds, the first access request does not carry the trust identifier. For another example, the trust identifier carried in the first access request is different from the trust identifier generated by the policy control apparatus. To distinguish between first access requests in different cases, the first access requests in the different cases are respectively referred to as the "first access request A", a "first access request B", a "first access request C", a "first access request D", and a "first access request E". The following uses Table 1 as an example to describe the first access requests in the different cases. Refer to Table 1.

**Table 1**

| | Whether the identifier is carried | Whether the identifier is the same as the registration identifier | Whether the trust identifier is carried | Whether the carried trust identifier is the same as the trust identifier generated by the policy control apparatus |
|---|---|---|---|---|
| First access request A | Yes | Yes | Yes | Yes |
| First access request B | Yes | Yes | No | x |
| First access request C | Yes | Yes | Yes | No |
| First access request D | No | × | Yes/No | Yes/No |
| First access request E | Yes | No | Yes/No | Yes/No |

As shown in the foregoing several cases in Table 1, optionally, refer to FIG. 2C. When a terminal sends the first access request B, after step 207, the method for determining a trusted terminal provided in embodiments of this application further includes step 208b to step 211b.

Step 208b: When the terminal accesses an application server, the terminal sends the first access request B, where the first access request B carries an identifier of the terminal but does not carry a trust identifier
Step 209b: A policy detection apparatus obtains the first access request B from the terminal, and compares the identifier in the first access request B with a registration identifier of the terminal.

Step 210b: When the identifier carried in the first access request B is the same as the registration identifier, the policy detection apparatus sends a first message to a policy control apparatus, where the first message indicates that the identifier carried in the first access request B is the same as the registration identifier, and the first access request B does not carry the trust identifier

Step 211b: The policy control apparatus receives the first message, and the policy control apparatus determines that the terminal is an untrusted terminal based on the first message.

In this embodiment, the first access request B does not carry the trust identifier, indicating that an environment awareness client in the terminal has been uninstalled. In this case, the environment awareness client cannot collect a dangerous event of the terminal. Therefore, the terminal is no longer reliable, and the policy control apparatus determines that the terminal is an untrusted terminal.

In this embodiment, step 201 to step 207 shown in FIG. 2C are similar to step 201 to step 207 in the embodiment corresponding to FIG. 2B. For step 201 to step 207 in this embodiment, refer to related descriptions of step 201 to step 207 in the embodiment corresponding to FIG. 2B. Details are not described herein again.

Optionally, refer to FIG. 2D. When a terminal sends the first access request C, after step 207, the method for determining a trusted terminal provided in embodiments of this application further includes step 208c to step 212c.

Step 208c: When the terminal accesses an application server, the terminal sends the first access request C, where the first access request C carries an identifier and a trust identifier of the terminal.

Step 209c: A policy detection apparatus obtains the first access request C from the terminal, and compares the identifier in the first access request C with a registration identifier of the terminal.

Step 210c: When the identifier carried in the first access request C is the same as the registration identifier, the policy detection apparatus sends the trust identifier to a policy control apparatus.

Step 211c: The policy control apparatus receives the trust identifier sent by the policy detection apparatus, and compares the trust identifier carried in the first access request C with a trust identifier generated by the policy control apparatus.

Step 212c: When the trust identifier carried in the first access request C is different from the trust identifier generated by the policy control apparatus, the policy control apparatus determines that the terminal is an untrusted terminal.

In this embodiment, although the first access request C carries the trust identifier, the trust identifier carried in the first access request C is different from the trust identifier generated by the policy control apparatus, indicating that the trust identifier is forged by an attacker. In this case, the terminal has a potential risk, and the policy control apparatus determines that the terminal is an untrusted terminal.

In this embodiment, step 201 to step 207 shown in FIG. 2D are similar to step 201 to step 207 in the embodiment corresponding to FIG. 2B. For step 201 to step 207 in this embodiment, refer to related descriptions of step 201 to step 207 in the embodiment corresponding to FIG. 2B. Details are not described herein again.

Optionally, refer to FIG. 2E. When a terminal sends the first access request D, after step 207, the method for determining a trusted terminal provided in embodiments of this application further includes steps 208d to 211d.

Step 208d: When the terminal accesses an application server, the terminal sends the first access request D, where the first access request D does not carry an identifier of the terminal.

Step 209d: A policy detection apparatus obtains the first access request D from the terminal, and the policy detection apparatus detects that the first access request D does not carry the identifier of the terminal.

Step 210d: The policy detection apparatus sends a second message to a policy control apparatus, where the second message indicates that the first access request D does not include the identifier

Step 211d: The policy control apparatus receives the second message sent by the policy detection apparatus, and the policy control apparatus determines that the terminal is an untrusted terminal based on the second message.

In this embodiment, when the first access request D does not include the identifier, the policy detection apparatus cannot perform identity verification on the terminal. When the policy detection apparatus cannot determine authenticity of an identity of the terminal, the policy detection apparatus sends the second message to the policy control apparatus, and the policy control apparatus determines that the terminal is an untrusted terminal based on the second message sent by the policy execution apparatus, to improve security of a zero trust architecture.

In this embodiment, step 201 to step 207 shown in FIG. 2E are similar to step 201 to step 207 in the embodiment corresponding to FIG. 2B. For step 201 to step 207 in this embodiment, refer to related descriptions of step 201 to step 207 in the embodiment corresponding to FIG. 2B. Details are not described herein again.

Optionally, refer to FIG. 2F. When a terminal sends the first access request E, after step 207, the method for determining a trusted terminal provided in embodiments of this application further includes steps 208e to 211e.

Step 208e: When the terminal accesses an application server, the terminal sends the first access request E, where the first access request E carries an identifier and a trust identifier of the terminal.

Step 209e: A policy detection apparatus receives the first access request E from the terminal, and the policy detection apparatus compares the identifier carried in the first access request E with a registration identifier of the terminal.

Step 210e: When the identifier carried in the first access request E is different from the registration identifier of the terminal, the policy detection apparatus sends a third message to a policy control apparatus.

Step 2 11e: The policy control apparatus receives the third message sent by the policy detection apparatus. The policy control apparatus determines that the terminal is an untrusted terminal based on the third message.

In this embodiment, step 201 to step 207 shown in FIG. 2F are similar to step 201 to step 207 in the embodiment corresponding to FIG. 2B. For step 201 to step 207 in this embodiment, refer to related descriptions of step 201 to step 207 in the embodiment corresponding to FIG. 2B. Details are not described herein again.

In conclusion, in the foregoing four cases of the first access request B, the first access request C, the first access request D, and the first access request E listed in Table 1, the policy control apparatus determines that the terminal is an untrusted terminal. The policy control apparatus sends the second indication to the policy execution apparatus, where the second indication indicates that the terminal is an untrusted terminal. After receiving the second indication, the policy execution apparatus does not continue to access the application server. Optionally, the policy execution apparatus feeds back prompt information to the terminal, where the prompt information is an error page or the like.

In an application scenario, in a zero trust architecture, when a user wants to access a data resource of an enterprise, a terminal (for example, a computer) sends a second access request according to HTTP through a browser, where the second access request carries a domain name (for example, " 1234.com") of an application server. Access traffic of the terminal reaches a policy execution apparatus. The policy execution apparatus detects whether the access request carries a token issued by a policy control apparatus. When the policy execution apparatus detects that the access request does not carry the token, the policy execution apparatus changes the domain name carried in the second access request from " 1234.com" to "W3.com@1234.com", to modify the second access request. "W3.com" is a domain name of the policy control apparatus. The policy execution apparatus then sends the modified second access request to the policy control apparatus. The policy control apparatus pushes a portal authentication page to the terminal. After receiving the authentication page, the terminal receives, on the authentication page, authentication information (for example, a user name and a password) input by the user, and sends the authentication information to the policy control apparatus. The policy control apparatus performs authentication on the terminal based on the authentication information. After the terminal is authenticated, the policy control apparatus allocates a trust identifier to the terminal, and sends the trust identifier to the terminal. The terminal receives the trust identifier, and writes the trust identifier into a cookie of the browser.

When the terminal needs to access the application server, an environment awareness client in the terminal obtains, from the cookie of the browser, the trust identifier saved by the terminal, and the terminal includes an identifier and the obtained trust identifier in a first access request, and sends the first access request. A policy detection apparatus obtains the first access request, and the policy detection apparatus performs identity verification on the terminal by using the identifier of the terminal that is carried in the first access request. After the identity verification of the terminal succeeds, the policy detection apparatus sends the trust identifier in the first access request to the policy control apparatus. The policy control apparatus determines, based on the trust identifier in the first access request, that the terminal is a trusted terminal. If the terminal is a trusted terminal, the policy control apparatus sends a first indication to the policy execution apparatus, to indicate that the terminal is a trusted terminal. The policy execution apparatus continues to access, based on the first indication sent by the policy control apparatus, the application server "1234.com" that the terminal needs to access, and sends the data resource of the application server to the terminal. After the browser in the terminal exits, the trust identifier in the cookie is also deleted. When the terminal needs to access the application server again, each apparatus in the zero trust system re-executes the foregoing process. To be specific, the policy control apparatus needs to re-allocate a trust identifier to the terminal, to ensure that the trust identifier allocated by the policy control apparatus to the terminal each time is different, thereby avoiding a replay attack by an attacker. The replay attack means that a malicious attacker obtains a trust identifier from an access request by intercepting the access request, constructs an access request including the trust identifier, and forges an identity of a trusted terminal through the constructed access request to access a network resource. In a conventional technology, even if an environment awareness client in a terminal has been uninstalled, a policy control apparatus may determine that the terminal is a trusted terminal due to a replay attack of an attacker. In the solutions of embodiments of this application, each time the terminal is authenticated, the policy control apparatus generates a different trust identifier, to prevent an attacker from replaying the trust identifier. This improves security performance of the zero trust architecture.

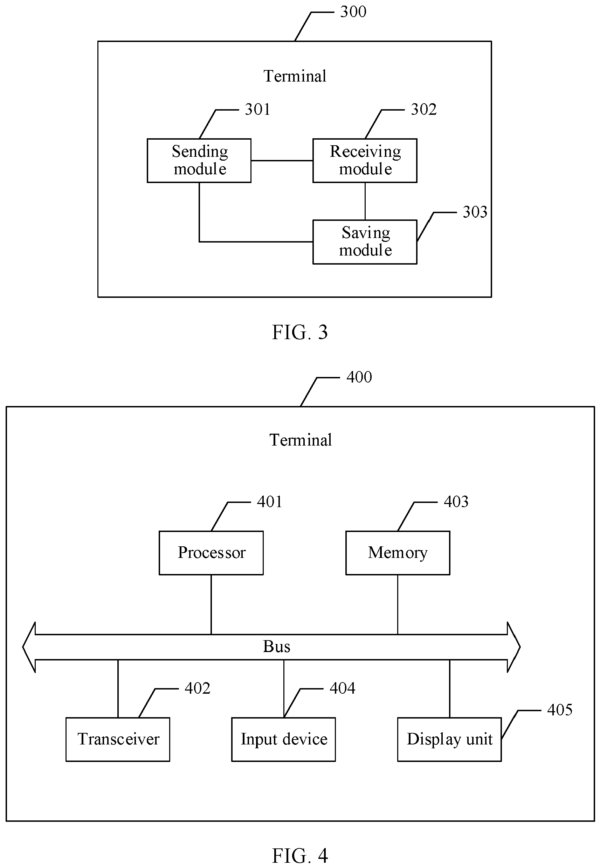

Corresponding to the method for determining a trusted terminal provided in embodiments of this application, the following describes an apparatus to which the method is applied. Refer to FIG. 3. This application provides an embodiment of a terminal 300. The terminal 300 includes a sending module 301, a receiving module 302, and a saving module 303.

The sending module 301 is configured to send an authentication request to a policy control apparatus, where the authentication request carries authentication information, and the authentication information is used by the policy control apparatus to perform authentication on the terminal based on the authentication information.

The receiving module 302 is configured to receive a trust identifier from the policy control apparatus, where the trust identifier is sent by the policy control apparatus after the terminal is authenticated.

The saving module 303 is configured to save the trust identifier.

The sending module 301 is further configured to send a first access request when the terminal accesses an application server, where the first access request carries the trust identifier, so that the policy control apparatus determines that the terminal is a trusted terminal.

Optionally, the sending module 301 and the receiving module 302 may alternatively be replaced with a transceiver module. Optionally, the transceiver module is a transceiver, and the saving module 303 is a memory. The transceiver has a sending and/or receiving function, and the transceiver may be replaced with a receiver and/or a transmitter.

Optionally, the transceiver module is a communication interface. Optionally, the communication interface is an input and output interface or a transceiver circuit. The input and output interface includes an input interface and an output interface. The transceiver circuit includes an input interface circuit and an output interface circuit.

Further, the sending module 301 is configured to perform step 204, step 207, and step 208a in the embodiments corresponding to FIG. 2A and FIG. 2B. The sending module 301 is further configured to perform the step of "sending a registration message to the policy detection apparatus" in step 201 and the step of "sending a second access request" in step 202 in the embodiment corresponding to FIG. 2B. The sending module 301 is further configured to perform step 208b in the embodiment corresponding to FIG. 2C, step 208c in the embodiment corresponding to FIG. 2D, step 208d in the embodiment corresponding to FIG. 2E, and step 208e in the embodiment corresponding to FIG. 2F. The receiving module 302 is configured to perform the step of "receiving the trust identifier sent by the policy control apparatus" in step 207 in the embodiments corresponding to FIG. 2A and FIG. 2B. The saving module 303 is configured to perform the step of "saving the trust identifier" in step 207 in the embodiments corresponding to FIG. 2A and FIG. 2B. For specific functions of the sending module 301, the receiving module 302, and the saving module 303, refer to descriptions of related steps in the foregoing method embodiments. Details are not described herein again.

Refer to FIG. 4. This application provides another embodiment of a terminal 400. The terminal 400 includes a processor 401, a transceiver 402, a memory 403, an input device 404, and a display unit 405. The processor 401, the transceiver 402, the memory 403, the input device 404, and the display unit 405 are connected through a bus. The processor 401, the transceiver 402, the memory 403, the input device 404, and the display unit 405 communicate with each other, to transfer a control signal and/or a data signal. The memory 403 is configured to store a computer program. The processor 401 is configured to invoke and run the computer program in the memory 403, to control the transceiver 402 to send and receive a signal. Optionally, the terminal 400 further includes an antenna. The transceiver 402 transmits or receives a radio signal through the antenna. Optionally, the processor 401 and the memory 403 are combined into a processing apparatus, and the processor 401 is configured to execute program code stored in the memory 403 to implement the foregoing functions. Optionally, the memory 403 is also integrated into the processor 401. Alternatively, the memory 403 is independent of the processor 401, in other words, located outside the processor 401.

The input device 404 may be configured to receive input digit or character information, and generate signal input related to user setting and function control of the terminal. Specifically, the input device 404 may include a touch panel and another input apparatus. The touch panel, also referred to as a touchscreen, can collect a touch operation of the user on or near the touch panel. The another input apparatus includes but is not limited to one or more of a physical keyboard, a function key (for example, a volume control key or an on/off key), and a mouse. For example, in this application, the input device 404 is configured to receive a domain name of an application server that is input by the user. The input device 404 is further configured to receive verification information input by the user. The verification information includes but is not limited to a user name and a password, fingerprint information of the user, and the like.

The display unit 405 may be configured to display information input by the user or information provided for the user. The display unit 405 may include a display panel. Optionally, the display panel is configured in the form of a liquid crystal display (Liquid Crystal Display, LCD), an organic light-emitting diode (Organic Light-Emitting Diode, OLED), or the like. For example, in this application, the display unit 405 is configured to display a data resource fed back by the application server, and the display unit 405 is further configured to display an authentication interface sent by the policy control apparatus.

The processor 401 is configured to read a computer program stored in the memory 403, so that the terminal 400 performs the steps performed by the terminal in the foregoing method embodiments. For details, refer to the descriptions in the foregoing method embodiments. Details are not described herein again.

In addition, in an optional design, processing and/or operations performed by the sending module 301 and the receiving module 302 in FIG. 3 are implemented by the transceiver 402 shown in FIG. 4. For details, refer to the detailed descriptions of the method embodiments. Details are not described herein again. Processing and/or operations performed by the saving module 303 in FIG. 3 are implemented by the memory 403 shown in FIG. 4.

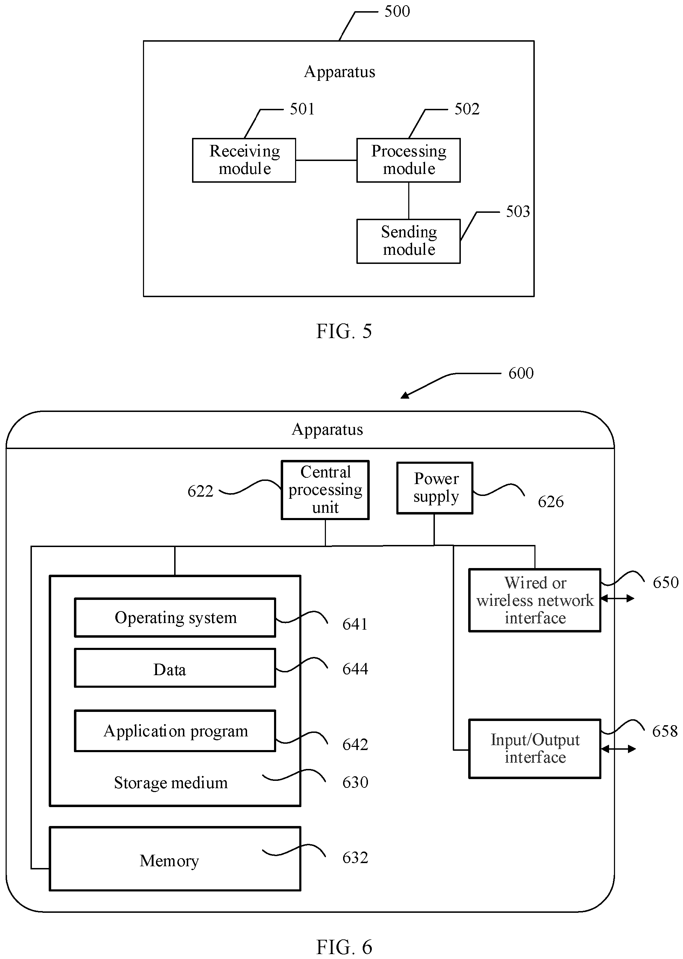

Refer to FIG. 5. This application provides an embodiment of an apparatus 500. The apparatus 500 is a policy control apparatus, and is configured to implement the function of the policy control apparatus in the foregoing method embodiments. Alternatively, the apparatus 500 is a policy execution apparatus, and is configured to implement the function of the policy execution apparatus in the foregoing method embodiments. Alternatively, the apparatus 500 is a policy detection apparatus, and is configured to implement the function of the policy detection apparatus in the foregoing method embodiments.

In a possible design, when the apparatus 500 is configured to implement the function of the policy control apparatus, the execution policy control apparatus includes a receiving module 501, a processing module 502, and a sending module 503, and the modules are configured to implement the following functions.

The receiving module 501 is configured to receive an authentication request from a terminal, where the authentication request carries authentication information.

The processing module 502 is configured to perform authentication on the terminal based on the authentication information, and generate a trust identifier after the terminal is authenticated.

The sending module 503 is configured to send the trust identifier to the terminal.

The receiving module 501 is configured to receive a first access request from the terminal, where the first access request carries a trust identifier
The processing module 502 is further configured to compare the trust identifier carried in the first access request with the generated trust identifier, and if the trust identifier carried in the first access request is the same as the generated trust identifier, determine that the terminal is a trusted terminal.

Further, the receiving module 501 is configured to perform step 205 and step 211a in the embodiments corresponding to FIG. 2A and FIG. 2B. The receiving module 501 is further configured to perform the step of "receiving a first message" in step 211b in the embodiment corresponding to FIG. 2C. The receiving module 501 is further configured to perform the step of "receiving the trust identifier sent by the policy detection apparatus" in step 211c in the embodiment corresponding to FIG. 2D. The receiving module 501 is further configured to perform the step of "receiving the second message sent by the policy detection apparatus" in step 211d in the embodiment corresponding to FIG. 2E. The receiving module 501 is further configured to perform the step of "receiving the third message sent by the policy detection apparatus" in step 211e in the embodiment corresponding to FIG. 2F. For a specific function of the receiving module 501, refer to descriptions in the foregoing method embodiments. Details are not described herein again. The processing module 502 is configured to perform step 206 in the embodiments corresponding to FIG. 2A and FIG. 2B, the step of "comparing the trust identifier carried in the first access request with the generated trust identifier" in step 211a, and step 212a. The processing module 502 is further configured to perform the step of "determining that the terminal is an untrusted terminal based on the first message" in step 211b in the embodiment corresponding to FIG. 2C. The processing module 502 is further configured to perform step 211c and step 212c in the embodiment corresponding to FIG. 2D. The processing module 502 is further configured to perform the step of "determining that the terminal is an untrusted terminal based on the second message" in step 211d in the embodiment corresponding to FIG. 2E. The processing module 502 is further configured to perform the step of "determining that the terminal is an untrusted terminal based on the third message" in step 211e in the embodiment corresponding to FIG. 2F. For a specific function of the processing module 502, refer to descriptions of related steps in the foregoing method embodiment. Details are not described herein again.

In a possible design, when the apparatus 500 is configured to perform the function of the policy execution apparatus, the execution policy execution apparatus includes a receiving module 501 and a processing module 502. Optionally, the execution policy control apparatus further includes a sending module 503, and the modules are configured to perform the following functions.

The receiving module 501 is configured to receive an access request from a terminal.

The processing module 502 is configured to: when the second access request does not carry a token allocated by a policy control apparatus, redirect, by the policy execution apparatus, the second access request to the policy control apparatus, where the policy control apparatus is triggered to send an authentication page to the terminal after the access request is redirected by the policy execution apparatus 500 to the policy control apparatus, the authentication page is for guiding the terminal to send an authentication request to the policy control apparatus, and the authentication request carries authentication information.

Further, the receiving module 501 is configured to perform the step of "obtaining the second access request from the terminal" in step 202 in the embodiment corresponding to FIG. 2B. For a specific function of the receiving module 501, refer to the description in step 202 in the embodiment corresponding to FIG. 2B. Details are not described herein again. The processing module 502 is configured to perform step 203 in the embodiment corresponding to FIG. 2B. For a specific function of the processing module 502, refer to the description of step 203 in the embodiment corresponding to FIG. 2B. Details are not described herein again. Optionally, the sending module 503 is configured to perform step 210a in the embodiment corresponding to FIG. 2B. For a specific function of the sending module 503, refer to the description of step 210a in the embodiment corresponding to FIG. 2B. Details are not described herein again.

In a possible design, when the apparatus 500 is configured to perform the function of the policy detection apparatus, the policy detection apparatus includes a receiving module 501 and a processing module 502. Optionally, the policy detection apparatus further includes a sending module 503, and the modules are configured to perform the following functions.

The receiving module 501 is configured to receive a first access request from a terminal, where the first access request carries an identifier and a trust identifier of the terminal, and the trust identifier is sent by a policy control apparatus to the terminal after the terminal is authenticated.

The processing module 502 is configured to compare the identifier with a registration identifier of the terminal.

The processing module 502 is further configured to: when the identifier is the same as the registration identifier of the terminal, send the trust identifier carried in the first access request to the policy control apparatus, where the trust identifier is used by the policy control apparatus to determine that the terminal is a trusted terminal.

Further, the receiving module 501 is configured to perform the step of "receiving a registration message" in step 201 and the step of "obtaining the first access request from the terminal" in step 209a in the embodiment corresponding to FIG. 2B. The receiving module 501 is further configured to perform the step of "obtaining the first access request B from the terminal" in step 209b in the embodiment corresponding to FIG. 2C. The receiving module 501 is further configured to perform the step of "obtaining the first access request C from the terminal" in step 209c in the embodiment corresponding to FIG. 2D. The receiving module 501 is further configured to perform the step of "obtaining the first access request D from the terminal" in step 209d in the embodiment corresponding to FIG. 2E. The receiving module 501 is further configured to perform the step of "obtaining the first access request E from the terminal" in step 209e in the embodiment corresponding to FIG. 2F. For a specific function of the receiving module 501, refer to descriptions of related steps in the foregoing method embodiments. Details are not described herein again. The processing module 502 is configured to perform the step of "comparing the identifier in the first access request with the registration identifier of the terminal" in step 209a in the embodiment corresponding to FIG. 2B. The processing module 502 is further configured to perform the step of "comparing the identifier in the first access request B with the registration identifier of the terminal" in step 209b in the embodiment corresponding to FIG. 2C. The processing module 502 is further configured to perform the step of "comparing the trust identifier carried in the first access request C with the trust identifier generated by the policy control apparatus" in step 209c in the embodiment corresponding to FIG. 2D. The processing module 502 is further configured to perform the step of "comparing the trust identifier carried in the first access request E with the trust identifier generated by the policy control apparatus" in step 209e in the embodiment corresponding to FIG. 2F. For a specific function of the processing module 502, refer to descriptions of related steps in the foregoing method embodiments. Details are not described herein again.

Optionally, the sending module 503 is further configured to perform step 210a in the embodiment corresponding to FIG. 2B, step 210b in the embodiment corresponding to FIG. 2C, step 210c in the embodiment corresponding to FIG. 2D, step 210d in the embodiment corresponding to FIG. 2E, and step 210e in the embodiment corresponding to FIG. 2F. For a specific function of the sending module 503, refer to descriptions of related steps in the foregoing method embodiments. Details are not described herein again.

Refer to FIG. 6. This application provides an apparatus 600. The apparatus 600 is the policy control apparatus in the foregoing method embodiments, and is configured to perform the function of the policy control apparatus. Alternatively, the apparatus 600 is the policy execution apparatus in the foregoing method embodiments, and is configured to perform the function of the policy execution apparatus. Alternatively, the apparatus 600 is the policy detection apparatus in the foregoing method embodiments, and is configured to perform the function of the policy detection apparatus. In this embodiment, an example in which the apparatus 600 is a server is used as an example for description. The apparatus 600 includes one or more central processing units (central processing units, CPUs) 622 (for example, one or more processors) and a memory 632, and one or more storage media 630 (for example, one or more mass storage devices) storing an application program 642 or data 644. The memory 632 and the storage medium 630 are for transient storage or persistent storage. The program stored in the storage medium 630 includes one or more modules (not shown in the figure), and each module includes a series of instruction operations for the apparatus. Further, the central processing unit 622 is configured to communicate with the storage medium 630, and perform, on the apparatus 600, a series of instruction operations in the storage medium 630.

Optionally, the apparatus 600 further includes one or more power supplies 626, one or more wired or wireless network interfaces 650, one or more input/output interfaces 658, and/or one or more operating systems 641.

In a possible design, the apparatus 600 is the policy control apparatus in the foregoing method embodiments. When the apparatus 600 is configured to perform the function of the policy control apparatus in the foregoing method embodiments, the processor is configured to read a computer program stored in the at least one memory, so that the apparatus performs the steps performed by the policy control apparatus in the foregoing method embodiments.

In a possible design, the apparatus 600 is the policy execution apparatus in the foregoing method embodiments. When the apparatus 600 is configured to perform the function of the policy execution apparatus in the foregoing method embodiments, the processor is configured to read the computer program stored in the at least one memory, so that the apparatus performs the steps performed by the policy execution apparatus in the foregoing method embodiments.

In a possible design, the apparatus 600 is the policy detection apparatus in the foregoing method embodiments. When the apparatus 600 is configured to perform the function of the policy detection apparatus in the foregoing method embodiments, the processor is configured to read the computer program stored in the at least one memory, so that the apparatus performs the steps performed by the policy detection apparatus in the foregoing method embodiments.

In addition, in an optional design, the functions of the receiving module 501 and the sending module 503 in FIG. 5 are performed by the network interface 650 in FIG. 6. The function of the processing module 502 in FIG. 5 is performed by the central processing unit 622 in FIG. 6.

Refer to FIG. 1A and FIG. 1B. An embodiment of this application further provides a system for determining a trusted terminal. The system is a communication system with a zero trust architecture. The system includes a terminal and a policy control apparatus. Optionally, the system further includes a policy execution apparatus and a policy detection apparatus. The terminal is configured to perform the steps performed by the terminal in the foregoing method embodiments, the policy control apparatus is configured to perform the steps performed by the policy control apparatus in the foregoing method embodiments, the policy execution apparatus is configured to perform the steps performed by the policy execution apparatus in the foregoing method embodiments, and the policy detection apparatus is configured to perform the steps performed by the policy detection apparatus in the foregoing method embodiments. For functions of the apparatuses, refer to the descriptions in the foregoing method embodiments. Details are not described herein again.

An embodiment of this application provides a computer-readable medium. The computer-readable storage medium is configured to store a computer program. When the computer program is run on a computer, the computer is enabled to perform the method performed by the terminal in the foregoing method embodiments. Alternatively, when the computer program is run on a computer, the computer is enabled to perform the method performed by the policy control apparatus in the foregoing method embodiments. Alternatively, when the computer program is run on a computer, the computer is enabled to perform the method performed by the policy execution apparatus in the foregoing method embodiments. Alternatively, when the computer program is run on a computer, the computer is enabled to perform the method performed by the policy detection apparatus in the foregoing method embodiments.

An embodiment of this application provides a chip. The chip includes a processor and a communication interface. The communication interface is, for example, an input/output interface, a pin, or a circuit. The processor is configured to read instructions to perform the method performed by the terminal in the foregoing method embodiments. Alternatively, the processor is configured to read instructions to perform the method performed by the policy control apparatus in the foregoing method embodiments. Alternatively, the processor is configured to read instructions to perform the method performed by the policy execution apparatus in the foregoing method embodiments. Alternatively, the processor is configured to read instructions to perform the method performed by the policy detection apparatus in the foregoing method embodiments.

An embodiment of this application provides a computer program product. When the computer program product is executed by a computer, the method performed by the terminal in the foregoing method embodiments is implemented. Alternatively, when the computer program product is executed by a computer, the method performed by the policy control apparatus in the foregoing method embodiments is implemented. Alternatively, when the computer program product is executed by a computer, the method performed by the policy execution apparatus in the foregoing method embodiments is implemented. Alternatively, when the computer program product is executed by a computer, the method performed by the policy detection apparatus in the foregoing method embodiments is implemented.

Optionally, the processor according to any one of the above is a general-purpose central processing unit (CPU), a microprocessor, an application-specific integrated circuit (application-specific integrated circuit, ASIC), or one or more integrated circuits configured to control program execution of the wireless communication method in the first aspect.

It may be clearly understood by persons skilled in the art that, for the purpose of convenient and brief description, for a detailed working process of the foregoing system, apparatus, and unit, refer to a corresponding process in the foregoing method embodiments, and details are not described herein again.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A method for determining a trusted terminal, applied to a terminal and comprising:
sending an authentication request to a policy control apparatus, wherein the authentication request carries authentication information, and the authentication information is used by the policy control apparatus to perform authentication on the terminal based on the authentication information;
receiving a trust identifier from the policy control apparatus, and saving the trust identifier, wherein the trust identifier is sent by the policy control apparatus after the terminal is authenticated; and
sending a first access request when the terminal accesses an application server, wherein the first access request carries the trust identifier, so that the policy control apparatus determines that the terminal is a trusted terminal.

2. The method according to claim 1, wherein the trust identifier is generated based on dynamic information related to the terminal.

3. The method according to claim 2, wherein the dynamic information related to the terminal comprises an IP address and/or a session identifier of the terminal, and the session identifier identifies a session established between the policy control apparatus and the terminal according to HTTP after the terminal is authenticated.

4. The method according to any one of claims 1 to 3, wherein the trust identifier is saved by the terminal in a cookie of a browser of the terminal, and the method further comprises:
when the terminal accesses the application server, obtaining the trust identifier from the cookie of the browser, and adding the trust identifier to the first access request.

5. The method according to any one of claims 1 to 4, wherein the first access request further carries a user token token, and the token is allocated by the policy control apparatus to the terminal after the terminal is authenticated.

6. The method according to claim 5, wherein before the sending an authentication request to a policy control apparatus, the method further comprises:
sending a second access request, wherein the second access request does not carry the token, the policy control apparatus is triggered to send an authentication page to the terminal after the second access request is redirected by a policy execution apparatus to the policy control apparatus, and the authentication request is sent after the terminal receives the authentication page.

7. The method according to any one of claims 1 to 4, wherein the first access request further comprises an identifier of the terminal, the identifier is used by a policy detection apparatus to compare the identifier with a registration identifier of the terminal, and when the identifier is the same as the registration identifier of the terminal, the policy detection apparatus sends the trust identifier carried in the first access request to the policy control apparatus.

8. A method for determining a trusted terminal, applied to a policy control apparatus and comprising:
receiving an authentication request from a terminal, wherein the authentication request carries authentication information;
performing authentication on the terminal based on the authentication information;
generating a trust identifier after the terminal is authenticated;
sending the trust identifier to the terminal;
receiving a first access request from the terminal, wherein the first access request carries a trust identifier, and the first access request is sent when the terminal accesses an application server; and
comparing the trust identifier carried in the first access request with the generated trust identifier, and if the trust identifier carried in the first access request is the same as the generated trust identifier, determining that the terminal is a trusted terminal.

9. The method according to claim 8, wherein the generating a trust identifier comprises:
generating the trust identifier based on dynamic information related to the terminal.

10. The method according to claim 8, wherein the generating the trust identifier based on dynamic information related to the terminal comprises:
establishing a session with the terminal according to HTTP; and
generating the trust identifier based on an IP address of the terminal and a session identifier of the session.

11. The method according to any one of claims 8 to 10, wherein the method further comprises:
receiving a second access request, and if the second access request does not carry a trust identifier or a trust identifier carried in the second access request is different from the generated trust identifier, determining that the terminal is an untrusted terminal.

12. A method for determining a trusted terminal, applied to a policy execution apparatus and comprising:
receiving an access request from a terminal; and
when the access request does not carry a token allocated by a policy control apparatus, redirecting, by the policy execution apparatus, the access request to the policy control apparatus, wherein the policy control apparatus is triggered to send an authentication page to the terminal after the access request is redirected by the policy execution apparatus to the policy control apparatus, the authentication page is for guiding the terminal to send an authentication request to the policy control apparatus, and the authentication request carries authentication information.

13. A method for determining a trusted terminal, applied to a policy detection apparatus and comprising:
receiving a first access request from a terminal, wherein the first access request carries an identifier and a trust identifier of the terminal, and the trust identifier is sent by a policy control apparatus to the terminal after the terminal is authenticated;
comparing the identifier with a registration identifier of the terminal; and
when the identifier is the same as the registration identifier of the terminal, sending the trust identifier carried in the access request to the policy control apparatus, wherein the trust identifier is used by the policy control apparatus to determine that the terminal is a trusted terminal.

14. The method according to claim 13, wherein the trust identifier is generated based on dynamic information related to the terminal.

15. The method according to claim 14, wherein the dynamic information related to the terminal comprises an IP address and/or a session identifier of the terminal, and the session identifier identifies a generated identifier of a session established between the policy control apparatus and the terminal according to HTTP after the terminal is authenticated.

16. A terminal, comprising:
a sending module, configured to send an authentication request to a policy control apparatus, wherein the authentication request carries authentication information, and the authentication information is used by the policy control apparatus to perform authentication on the terminal based on the authentication information;
a receiving module, configured to receive a trust identifier from the policy control apparatus, wherein the trust identifier is sent by the policy control apparatus after the terminal is authenticated; and
a saving module, configured to save the trust identifier, wherein
the sending module is further configured to send a first access request when the terminal accesses an application server, wherein the first access request carries the trust identifier, so that the policy control apparatus determines that the terminal is a trusted terminal.

17. A policy control apparatus, comprising:
a receiving module, configured to receive an authentication request from a terminal, wherein the authentication request carries authentication information;
a processing module, configured to perform authentication on the terminal based on the authentication information, and generate a trust identifier after the terminal is authenticated; and
a sending module, configured to send the trust identifier to the terminal, wherein
the receiving module is configured to receive a first access request from the terminal, wherein the first access request carries a trust identifier; and
the processing module is further configured to compare the trust identifier carried in the first access request with the generated trust identifier, and if the trust identifier carried in the first access request is the same as the generated trust identifier, determine that the terminal is a trusted terminal.

18. A policy execution apparatus, comprising:
a receiving module, configured to receive an access request from a terminal; and
a processing module, configured to: when the second access request does not carry a token allocated by a policy control apparatus, redirect, by the policy execution apparatus, the second access request to the policy control apparatus, wherein the policy control apparatus is triggered to send an authentication page to the terminal after the access request is redirected by the policy execution apparatus to the policy control apparatus, the authentication page is for guiding the terminal to send an authentication request to the policy control apparatus, and the authentication request carries authentication information.

19. A policy detection apparatus, comprising:
a receiving module, configured to receive a first access request from a terminal, wherein the first access request carries an identifier and a trust identifier of the terminal, and the trust identifier is sent by a policy control apparatus to the terminal after the terminal is authenticated; and
a processing module, configured to compare the identifier with a registration identifier of the terminal, wherein
the processing module is further configured to: when the identifier is the same as the registration identifier of the terminal, send the trust identifier carried in the first access request to the policy control apparatus, wherein the trust identifier is used by the policy control apparatus to determine that the terminal is a trusted terminal.

20. A system for determining a trusted terminal, comprising:
a terminal, configured to send an authentication request to a policy control apparatus, wherein the authentication request carries authentication information; and
the policy control apparatus, configured to: perform authentication on the terminal based on the authentication information; generate a trust identifier after the terminal is authenticated; and send the trust identifier to the terminal, wherein
the terminal is further configured to receive the trust identifier and save the trust identifier; and send a first access request when the terminal accesses an application server, wherein the first access request carries a trust identifier of the terminal; and
the policy control apparatus is further configured to compare the trust identifier carried in the first access request with the generated trust identifier, and if the trust identifier carried in the first access request is the same as the generated trust identifier, determine that the terminal is a trusted terminal.

21. The system according to claim 20, wherein the first access request carries an identifier of the terminal, and the system further comprises a policy detection apparatus, wherein
the policy detection apparatus is configured to: receive the first access request from the terminal; compare the identifier of the terminal with a registration identifier of the terminal; and when the identifier is the same as the registration identifier, send the trust identifier carried in the first access request to the policy control apparatus.

22. The system according to claim 20 or 21, wherein the first access request further carries a user token token, and the token is allocated by the policy control apparatus to the terminal after the terminal is authenticated;
before the terminal sends the authentication request, the terminal is further configured to send a second access request, wherein the second access request does not carry the token; and
the system further comprises a policy execution apparatus, wherein
the policy execution apparatus is configured to receive the second access request from the terminal, and redirect the second access request to the policy control apparatus; and
the policy control apparatus is further configured to send an authentication page to the terminal based on the second access request, wherein the authentication page is for guiding the terminal to send the authentication request to the policy control apparatus.

23. The system according to claim 22, wherein the policy execution apparatus is a network forwarding device, and the network forwarding device comprises a firewall, a switch, a router, a gateway, and a bridge; and
the policy control apparatus and the policy detection apparatus are computer cluster devices, and both the policy execution apparatus and the policy detection apparatus are communicatively connected to the policy control apparatus.

24. The system according to any one of claims 20 to 23, wherein
the policy control apparatus is further configured to generate the trust identifier based on dynamic information related to the terminal.

25. The system according to any one of claims 21 to 24, wherein
the policy control apparatus is further configured to establish a session with the terminal according to HTTP; and generate the trust identifier based on an IP address of the terminal and a session identifier of the session.

26. An electronic device, comprising a processor, wherein the processor is coupled to at least one memory, and the processor is configured to read a computer program stored in the at least one memory, so that the electronic device performs the method according to any one of claims 1 to 7, the method according to any one of claims 8 to 11, the method according to claim 12, or the method according to any one of claims 13 to 15.

27. A computer-readable medium, wherein the computer-readable medium is configured to store a computer program; and when the computer program is run on a computer, the computer is enabled to perform the method according to any one of claims 1 to 7, the method according to any one of claims 8 to 11, the method according to claim 12, or the method according to any one of claims 13 to 15.

28. A chip, comprising a processor and a communication interface, wherein the processor is configured to read instructions to perform the method according to any one of claims 1 to 7, the method according to any one of claims 8 to 11, the method according to claim 12, or the method according to any one of claims 13 to 15.

29. A computer program product, wherein when the computer program product is executed by a computer, the method according to any one of claims 1 to 7, the method according to any one of claims 8 to 11, the method according to claim 12, or the method according to any one of claims 13 to 15 is implemented.
